# FASCICULE DE BREVET EUROPEEN

(11) **EP 2 773 830 B1**
(45) Date de publication et mention de la délivrance du brevet: **14.12.2016**
(21) Numéro de dépôt: 12775437.2
(22) Date de dépôt: 01.10.2012
(51) Int. Cl.: E05C 17/20

(54) **DISPOSITIF D'ARRET DE PORTE**
TÜRSTOPPVORRICHTUNG
DOOR STOP DEVICE

(30) Priorité: 11.10.2011 FR 1103088
(43) Date de publication de la demande: 10.09.2014
(73) Titulaire: Prieur, Andre, 92250 La Garenne Colombes (FR)
(72) Inventeur: Prieur, Andre, 92250 La Garenne Colombes (FR)
(86) Numéro de dépôt international: PCT/EP2012/004117
(87) Numéro de publication internationale: WO 2013/053444

(56) Documents cités:
- EP-A1- 0 952 289
- FR-A1- 2 874 051
- FR-A1- 2 889 234
- US-B1- 6 370 732

## Description

La présente invention se rapporte à un dispositif d'arrêt de porte, comportant un mécanisme de verrouillage et un guide, l'un étant prévu pour être rendu solidaire de l'ouvrant de la porte, l'autre du dormant, ledit mécanisme de verrouillage intégrant au moins un élément de freinage venant en appui sur au moins un galet de blocage placé au contact du guide, l'axe de rotation dudit galet de blocage pouvant se déplacer avec un débattement limité par rapport au corps dudit mécanisme de verrouillage, lequel comporte encore des moyens de rappel élastique destinés à ramener lesdits galet de blocage et élément de freinage en appui l'un sur l'autre, permettant ainsi le maintien de la porte en position ouverte dans n'importe quelle position.

L'invention concerne le domaine des dispositifs d'arrêt de porte et trouvera une application toute particulière dans les domaines des ouvrants pour l'automobile, le bâtiment et les équipements électroménagers.

On connaît d'ores et déjà par le document FR 2 889 234, un dispositif d'arrêt de porte permettant l'arrêt et le maintien d'une porte battante ou coulissante, dans une position indéterminée, entre la fermeture et la pleine ouverture, dès lors que l'on cesse d'exercer l'effort nécessaire à la manoeuvre d'ouverture ou de fermeture, avec en particulier des applications possibles aux ouvrants des véhicules automobiles.

Ainsi, le dispositif d'arrêt de porte à positions de maintien indéterminées décrit dans le document FR 2 889 234 est constitué, substantiellement :
- d'un guide articulé, formé d'une tige métallique ou autre matériau résistant, pouvant offrir des chemins de roulage sur deux faces opposées
- d'un mécanisme pourvu de moyens de blocage du guide, ces moyens de blocage étant à commande de déblocage sous l'action d'une traction exercée sur ledit mécanisme sensiblement parallèlement au guide.

Plus particulièrement, le mécanisme comporte un chariot assurant le maintien en rotation sur son axe d'un galet de blocage, celui-ci étant encore monté avec une mobilité relative sur ledit chariot suivant une direction perpendiculaire à son axe, de manière à pouvoir conférer à ce galet de blocage, selon un des modes de réalisation, une position bloquée au contact d'un élément de freinage et par ailleurs une position libre en rotation lorsque ledit galet de blocage est écarté de l'élément de freinage. Des moyens de rappel élastique agissant sur l'axe de ce galet de blocage permettent de le repousser dans sa position bloquée.

Ledit mécanisme comporte encore un contre-galet solidaire en rotation d'un support adapté. Entre ce contre-galet et le galet de blocage s'engage le guide articulé.

De manière particulière, en ce qui concerne le galet de blocage, sa structure tout comme les matériaux le constituant, sont adaptés à cette fonction. De plus, le guide peut recevoir, au niveau de ses pistes de roulement, des aspérités, bossages ou autres, pour favoriser l'accrochage du galet de blocage, lequel sera conçu en un matériau susceptible de procurer un haut coefficient de frottement.

Cependant, ce dispositif d'arrêt de porte est connu pour n'offrir qu'une force de blocage limitée, car les moyens de rappel élastique qui agissent à la fois pour maintenir la position bloquée, mais aussi pour ramener le galet de blocage au contact de l'élément de freinage, lors du re-verrouillage, n'autorisent qu'un ratio limité entre, d'une part, la force de blocage correspondant au mode verrouillé, et d'autre part, la force nécessaire au maintien de la position de rotation libre du galet de blocage correspondant au mode déverrouillé. En effet, dans le mécanisme décrit ci-avant, le maintien en position de rotation libre du galet de blocage, nécessaire lors des manoeuvres de la porte, suppose que des forces de friction ou de déformation plastique viennent compenser l'effort fourni par les moyens de rappel élastique, ceci afin de maintenir un équilibre des forces et éviter le re-verrouillage instantané sous l'action des moyens de rappel élastique. Or lesdites forces de friction ou de déformation plastique sont d'amplitude volontairement limitée pour éviter d'imposer un effort trop important lors des ouvertures et fermetures de la porte. Cela impose une limitation de la force fournie par les moyens de rappel élastique, donc une limitation de la force de blocage.

La présente invention propose une solution pour remédier à cet inconvénient en améliorant ce dispositif d'arrêt de porte, par l'ajout d'un dispositif d'interface mobile, permettant de moduler l'effort de la force fournie par les moyens de rappel élastique, selon que le galet de blocage est en position bloquée d'une part, ou en rotation libre, d'autre part, rendant compatibles une force de blocage importante en mode verrouillé et un effort de manoeuvre relativement faible en mode déverrouillé.

A cet effet, l'invention concerne un dispositif d'arrêt de porte, comportant un mécanisme de verrouillage et un guide, l'un étant prévu pour être rendu solidaire de l'ouvrant de la porte, l'autre du dormant, ledit mécanisme de verrouillage intégrant au moins un élément de freinage venant en appui sur au moins un galet de blocage placé au contact dudit guide, l'axe de rotation dudit galet de blocage pouvant se déplacer selon une translation globalement parallèle audit guide et avec un débattement limité par rapport au corps dudit mécanisme de verrouillage, lequel comporte encore des moyens de rappel élastique destinés à repousser lesdits galet de blocage et élément de freinage en appui l'un sur l'autre, remarquable par le fait que :
- ledit galet de blocage est monté sur le mécanisme de verrouillage de manière à autoriser une mobilité de son axe en translation parallèlement au guide et selon une course limitée; cette disposition permet de libérer le galet de blocage de l'emprise de l'élément de freinage lorsqu'un effort, suffisant pour déplacer le galet de blocage, apparaît sur le guide. Le dispositif d'arrêt de porte est alors en mode déverrouillé.
- un dispositif d'interface mobile, lui-même monté mobile sur le mécanisme de verrouillage, suivant une direction globalement perpendiculaire au guide, comporte des moyens d'appui, qui coopèrent avec l'axe du galet de blocage de façon à transmettre les efforts produits par les moyens de rappel élastique. Lesdits moyens d'appui du dispositif d'interface mobile peuvent être constitués par des encoches et/ou des bossages dont les formes présentent des rampes avec différents degrés d'inclinaison, venant directement ou indirectement en correspondance avec l'axe du galet de blocage. Il est facile de constater qu'en fonction de l'inclinaison desdites rampes, la composante de la force agissant sur l'axe du galet de blocage, selon une direction parallèle au guide, sera plus ou moins importante lorsque ledit axe se déplace relativement auxdites rampes. Ainsi, tel qu'il sera expliqué ci-dessous, il sera avantageux de disposer d'une rampe avec un fort degré d'inclinaison par rapport au guide lorsque le galet de blocage sera en position bloquée, au contact de l'élément de freinage. Le dispositif d'arrêt de porte est alors en mode verrouillé. A l'inverse, il sera avantageux de disposer d'une rampe avec un faible degré d'inclinaison par rapport au guide, lorsque le galet de blocage sera en rotation au contact du guide et sans contact avec l'élément de freinage. Le dispositif d'arrêt de porte est dans ce cas en mode déverrouillé.
- les moyens de rappel élastique agissent suivant une direction globalement perpendiculaire au guide sur le dispositif d'interface mobile décrit ci-avant, lequel agit sur l'axe du galet de blocage suivant une direction perpendiculaire audit axe, mais avec une inclinaison variable. Ainsi, lorsque l'axe du galet de blocage coulisse en translation parallèle au guide sous l'effet d'un effort suffisant apparaissant sur ledit guide et transmis par le galet de blocage, l'axe dudit galet de blocage sort des encoches ménagées dans le dispositif d'interface mobile pour venir en appui sur des rampes d'inclinaisons variables, faisant subir audit dispositif d'interface mobile un déplacement globalement perpendiculaire au mouvement de l'axe du galet de blocage, ce qui a pour effet de venir comprimer les moyens de rappel élastique.
Cette disposition permet au dispositif d'interface mobile d'agir sur l'axe du galet de blocage en répercutant l'effort lié à la compression des moyens de rappel élastique selon une incidence variable, permettant ainsi de moduler la composante de la force agissant parallèlement au guide. Il en résulte que la force reçue par l'axe du galet de blocage selon une composante parallèle au guide, peut être rendue relativement importante, lorsque le galet de blocage est dans sa position bloquée, dispositif d'arrêt de porte en mode verrouillé et, à l'inverse, ladite force agissant selon une composante parallèle au guide peut être rendue beaucoup plus faible, lorsque le galet de blocage se trouve en position de rotation libre, sans contact avec l'élément de freinage, le dispositif d'arrêt de porte étant alors en mode déverrouillé. Les moyens de rappel élastique, directement ou indirectement solidaires du mécanisme de blocage, peuvent être constitués d'un ensemble métallique ou plastique, ou encore constitués d'un mélange de ces matériaux, par exemple un ensemble comprenant un ressort hélicoïdal ou des lames élastiques, ou encore d'un élément déformable, tel un bloc élastomère.
- l'élément de freinage venant en appui sur le galet de blocage est lui-même monté mobile sur le mécanisme de verrouillage, suivant une direction globalement perpendiculaire au guide, de sorte qu'il peut être écarté du galet de blocage, afin de libérer ce dernier. L'invention prévoit que l'élément de freinage peut être actionné par le mouvement du dispositif d'interface mobile, au moyen d'une liaison mécanique permettant d'accrocher l'élément de freinage au dispositif d'interface mobile, lors du déplacement de ce dernier. A titre d'exemple non limitatif, cette liaison mécanique peut être constituée par des ergots prévus sur l'un des éléments et qui viennent en correspondance avec des encoches oblongues prévues dans l'autre élément. L'invention prévoit par ailleurs que l'élément de freinage peut être soumis aux effets de moyens de rappel élastique, destinés à ramener ledit élément de freinage dans la position de blocage, au contact du galet de blocage. Ces moyens de rappel élastiques, directement ou indirectement solidaires du mécanisme de verrouillage, peuvent être de même nature que les moyens de rappel élastique coopérant avec le dispositif d'interface mobile et décrits ci-après dans un exemple de réalisation.
Il est à noter que lorsque le galet de blocage est libéré de l'emprise de l'élément de freinage, et qu'il est en rotation au contact du guide, le dispositif d'arrêt de porte étant alors en mode déverrouillé, l'axe dudit galet de blocage est soumis à l'effort des moyens de rappel élastique au travers du dispositif d'interface mobile, cet effort ayant tendance à ramener le galet de blocage dans sa position bloquée, au contact de l'élément de freinage. Le maintien en mode déverrouillé est rendu possible grâce à l'équilibre des forces agissant sur l'axe du galet de blocage. Cet équilibre est atteint grâce à différentes forces, qui s'opposent à l'action des moyens de rappel élastique agissant sur l'axe du galet de blocage par l'intermédiaire du dispositif d'interface mobile, lesquelles différentes forces proviennent principalement :
- du frottement intervenant entre le galet de blocage et le corps du mécanisme de verrouillage, en raison de la rotation dudit galet de blocage. Ledit frottement peut être ajusté grâce au jeu plus ou moins important qui sera ménagé au niveau des zones de contact prévues entre le galet de blocage et le mécanisme de verrouillage. Les zones de contact prévues au niveau du galet de blocage peuvent être situées en tout point de la périphérie ou des flancs dudit galet de blocage.
- du frottement intervenant entre le galet de blocage et le guide, en raison de la rotation dudit galet de blocage au contact du guide.
- des efforts liés à la déformation plastique du galet de blocage lors de sa rotation au contact du guide, lorsque ledit galet de blocage est réalisé en matériau déformable, tel un composé élastomère à titre d'exemple.

### Variante du galet de blocage :

Afin d'améliorer la stabilité du fonctionnement du dispositif d'arrêt de porte en mode déverrouillé, il est proposé une variante du galet de blocage permettant d'accroître les forces de frottement décrites ci-avant et qui consiste à juxtaposer audit galet de blocage au moins un autre galet, dit galet de friction, lui-même monté co-axialement au galet de blocage, sans contact avec le guide, et qui présente des surfaces de friction en contact avec ledit galet de blocage. Lors du déplacement du galet de blocage et de sa mise en rotation dans le mode déverrouillé, il est prévu que le galet de friction vienne s'immobiliser au contact, soit d'une partie rugueuse du mécanisme de verrouillage, soit d'une partie rugueuse du dispositif d'interface mobile. Cette disposition assure l'apparition d'un effort de frottement entre, d'une part, le galet de blocage lors de sa rotation au contact du guide et d'autre part, le galet de friction qui est maintenu immobile. L'équilibre des forces entre les efforts produits par les moyens de rappel élastique, d'une part, et les forces de frottement agissant sur le galet de blocage pendant la phase déverrouillée, d'autre part, est ainsi renforcé.

### Variante des moyens de rappel élastique :

Les moyens de rappel élastique coopèrent avec le dispositif d'interface mobile afin de soumettre l'axe du galet de blocage à un effort produit par lesdits moyens de rappel élastique. Selon un des modes de réalisation des moyens de rappel élastique, l'invention propose de moduler la valeur de la force fournie par lesdits moyens de rappel élastique, selon l'inclinaison du mécanisme de verrouillage, ceci afin de permettre de moduler la force de maintien en mode verrouillé, en fonction de l'inclinaison dudit mécanisme de verrouillage. A cet effet, l'invention propose de réaliser les moyens de rappel élastique par superposition des effets d'au moins deux moyens de rappel élastique distincts, disposés de telle sorte que les efforts qu'ils fournissent puissent se cumuler dans la même direction, lorsqu'un moyen de liaison mécanique vient s'interposer entre lesdits moyens de rappel élastique distincts, sous le simple effet de la gravité. Le moyen de liaison mécanique agissant sous le simple effet de la gravité peut être formé avantageusement d'une bille sphérique logée dans une cavité aux parois inclinées, ladite cavité se trouvant située sur une partie d'un des moyens de rappel élastique distincts, laquelle partie se trouve positionnée en vis-à-vis d'une partie située sur l'autre moyen de rappel élastique, les formes desdites parties pouvant se rapprocher l'une de l'autre lorsque la bille sphérique reste dans sa cavité. Dans ce cas, seul l'un des moyens de rappel élastique est mis en compression lors du déplacement du dispositif d'interface mobile, tandis que l'autre moyen de rappel élastique ne subit aucun mouvement et n'est donc pas mis en compression, car il n'est pas lié mécaniquement au premier moyen de rappel élastique. A l'inverse, lorsque la bille sphérique quitte sa cavité sous l'effet de la gravité, en raison d'une inclinaison au-delà d'un seuil prédéterminé du dispositif d'arrêt de porte, ladite bille sphérique vient s'interposer entre lesdites formes des deux parties des moyens de rappel élastique, constituant ainsi un lien mécanique permettant au premier moyen de rappel élastique d'agir sur le deuxième moyen de rappel élastique et provoquant ainsi un cumul des efforts fournis par chacun des deux moyens de rappel élastique distincts. Ainsi, lorsque l'inclinaison du dispositif d'arrêt de porte reste en-dessous d'un certain seuil prédéterminé, seul l'un des moyens de rappel élastique est sollicité par le déplacement du dispositif d'interface mobile et l'effort résultant est plus faible. A l'inverse, lorsque l'inclinaison du dispositif d'arrêt de porte excède un certain seuil prédéterminé, les deux moyens de rappel élastique seront actionnés simultanément par le déplacement du dispositif d'interface mobile et l'effort résultant est plus important.

D'autres buts et avantages de la présente invention apparaitront dans la description qui va suivre, se rapportant à un mode de réalisation du dispositif proposé par l'invention, ayant valeur d'exemple non limitatif et dont la compréhension sera facilitée en se référant aux dessins ci-joints:
- Fig. 1 : représentation schématique du dispositif d'arrêt de porte, amélioré par l'ajout d'un dispositif d'interface mobile (25) agissant sur l'axe (22) du galet de blocage (21).
- Fig. 2 : représentation schématique du corps du mécanisme de verrouillage (2).
- Fig. 3 : représentation schématique de l'élément de freinage (24).
- Fig. 4 : schéma du dispositif d'interface mobile (25), vue de face et de côté.
- Fig. 5 : schéma du dispositif d'interface mobile (25), selon une variante où les moyens de rappel élastiques (26) sont remplacés par des lames élastiques (253a), (253b), (253c) et (253d).
- Fig. 6 : schéma du dispositif d'arrêt de porte représenté en mode déverrouillé.
- Fig. 7 : schéma du dispositif d'arrêt de porte selon une variante où les moyens de rappel élastiques (26) sont remplacés par des lames élastiques (253a), (253b), (253c) et (253d).
- Fig. 8 : schéma d'une variante du galet de blocage (21) où ce dernier est complété par un galet de friction (211).
- Fig. 9 : schéma des patins (29a) et (29b) prévus pour immobiliser le galet de friction (211).
- Fig. 10 : schéma d'une variante des moyens de rappel élastique (253a), (253b), (253c) et (253d), dans le cas où ces derniers sont complétés par un bloc (26A) prévu pour accroître la force de rappel lorsque le dispositif d'arrêt de porte est en position inclinée.
- Fig. 11 : schéma de la variante présentée en Fig. 10, dans le cas où le dispositif d'arrêt de porte n'est pas en position inclinée, bille sphérique (2552) restée dans sa cavité (2551).
- Fig. 12 : schéma de la variante présentée en Fig. 10, dans le cas où le dispositif d'arrêt de porte est en position inclinée, bille sphérique (2552) sortie de sa cavité (2551).

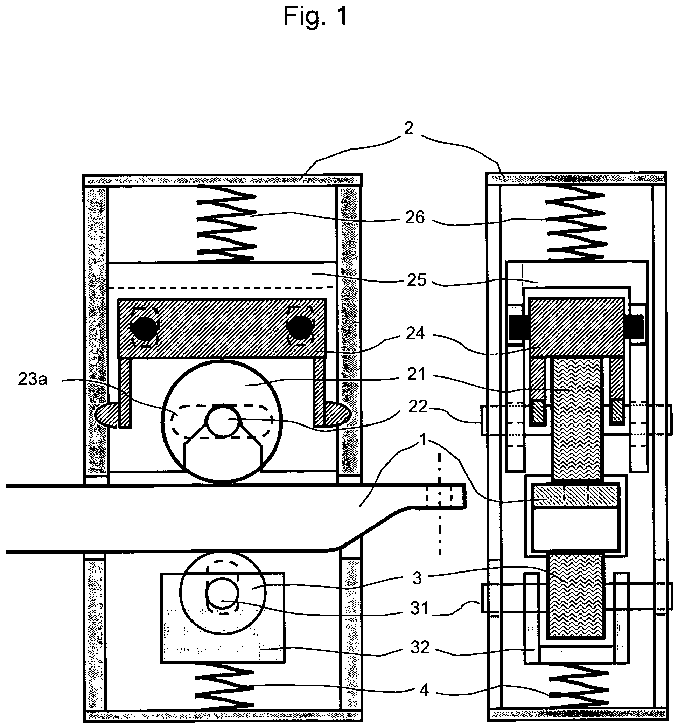

L'exemple de réalisation du dispositif d'arrêt de porte proposé par la présente invention est constitué par (Fig. 1) :
- Un guide (1), préférentiellement articulé à l'une de ses extrémités, formé avantageusement d'une tige métallique ou autre matériau résistant, pouvant offrir au moins un chemin de roulage, préférentiellement deux, sur des faces opposées. Ce guide peut être rendu solidaire du dormant de la porte ou de l'ouvrant. La section du guide (1) peut être variable de sorte que les faces opposées pouvant offrir des chemins de roulage ne sont pas nécessairement parallèles sur toute leur longueur. En outre, des encoches ou des bossages peuvent être prévus sur le ou les chemins de roulage du guide (1), afin de constituer des zones de plus ou moins grande résistance au roulage.
- Un mécanisme de verrouillage (2), mobile par rapport au guide (1) et apte à être solidarisé de l'ouvrant de la porte ou du dormant, pour être en mesure de coopérer avec le guide (1) et dont la fonction consiste à maintenir verrouillé le guide (1) dans une position indéterminée, dès lors que l'on n'applique pas sur la porte un effort supérieur à la force de déverrouillage.

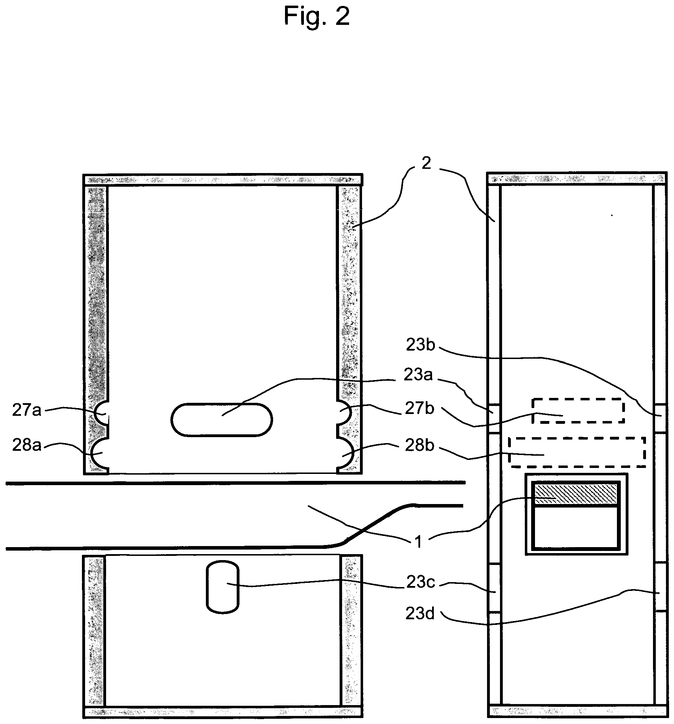

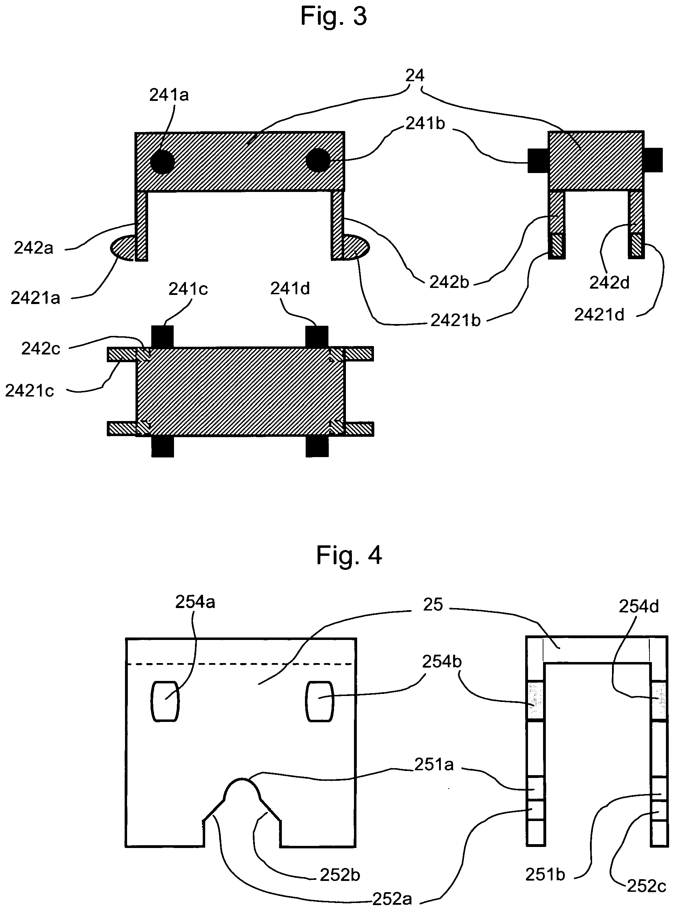

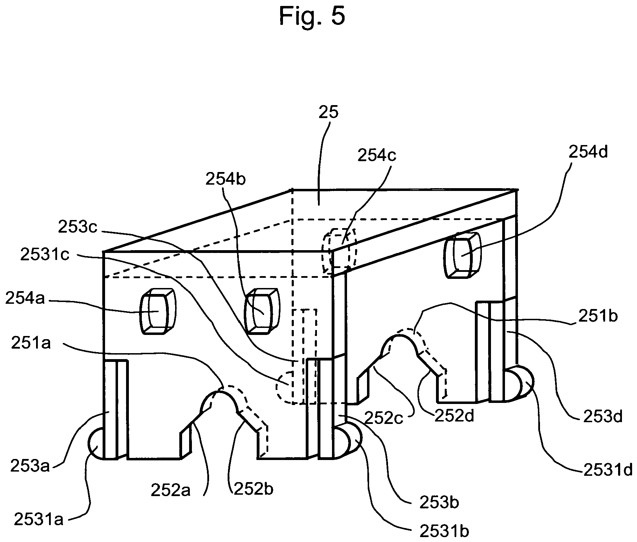

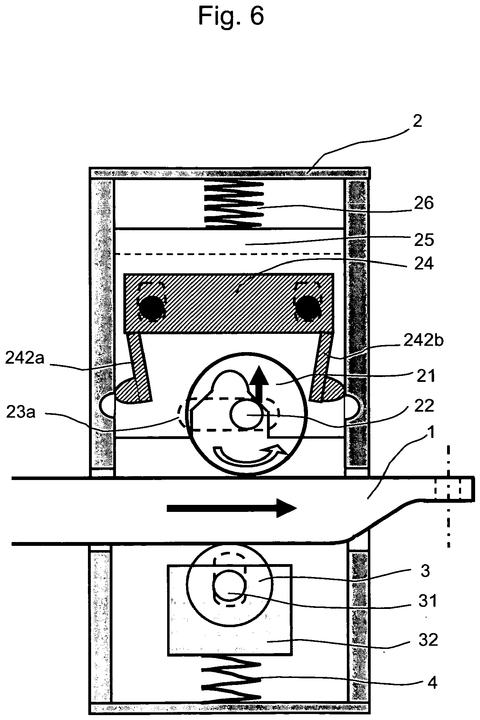

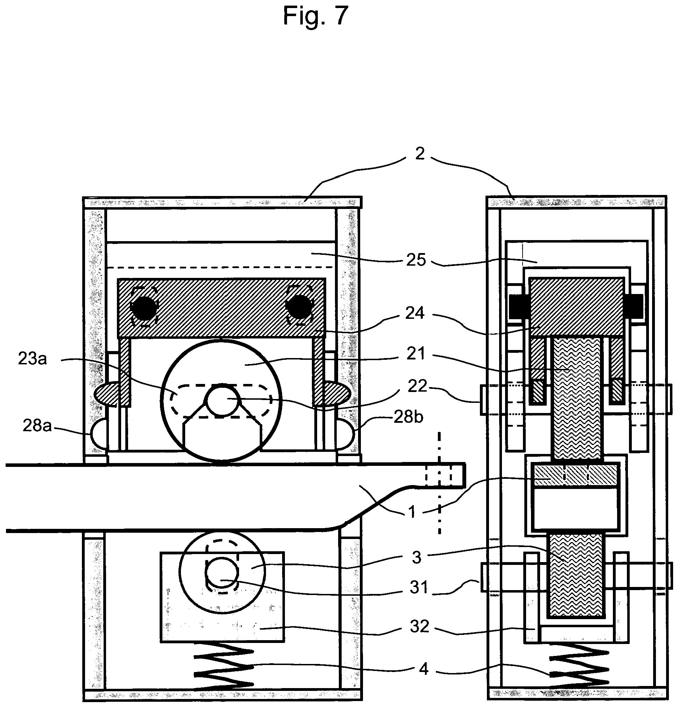

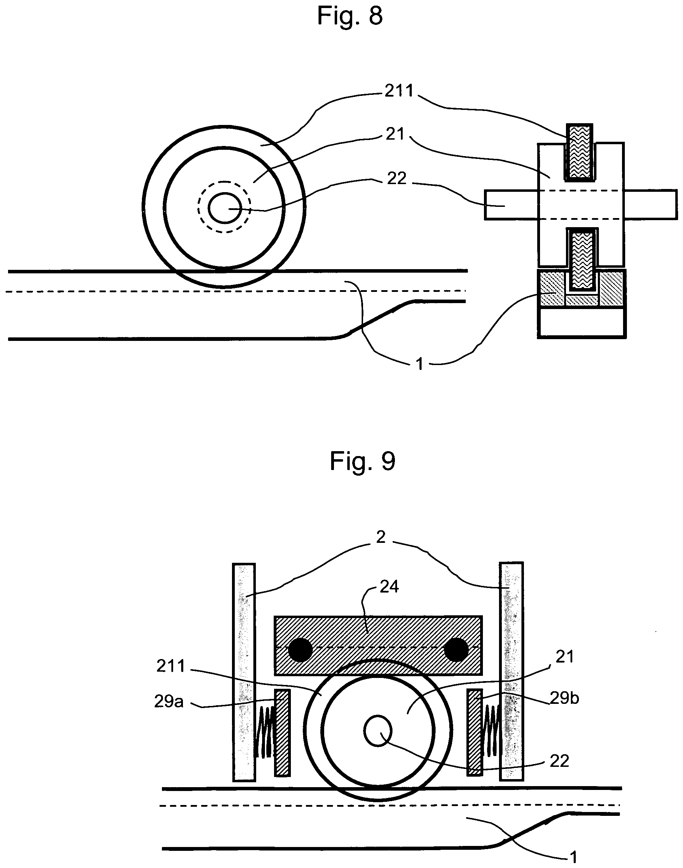

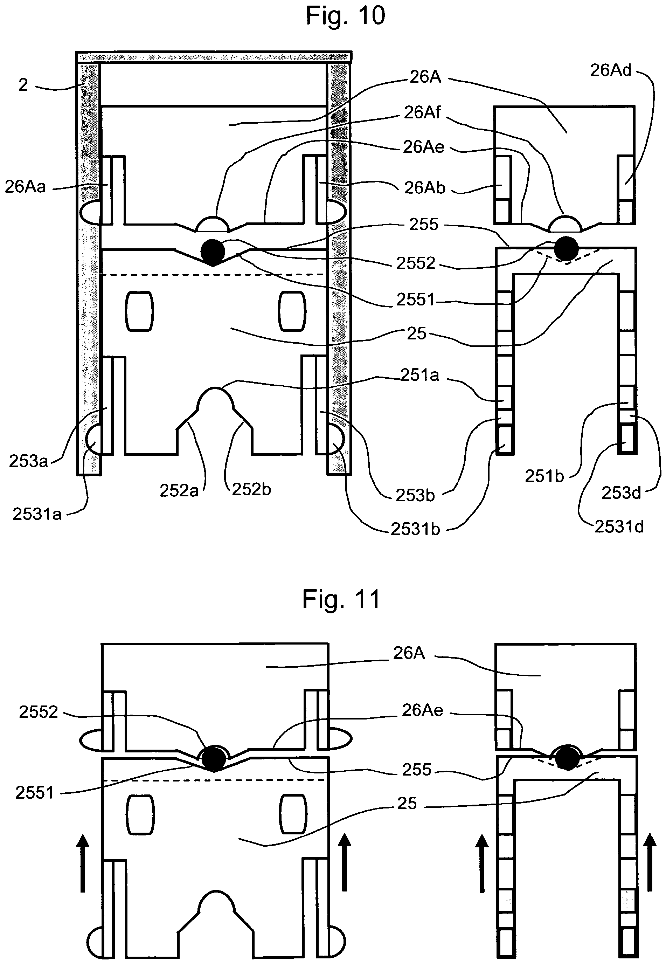

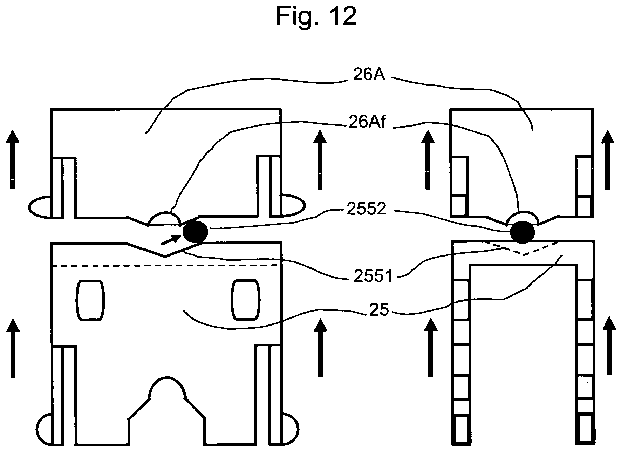

Ledit mécanisme de verrouillage (2) comprend (Fig. 1) :
- un galet de blocage (21), monté sur son axe (22).
- des ouvertures latérales de guidage (23a) et (23b) (Fig. 2), dans lesquelles est susceptible de se déplacer, parallèlement au guide (1) et avec une mobilité d'amplitude limitée, l'axe (22) du galet de blocage (21), lesdites ouvertures latérales de guidage (23a) et (23b) pouvant être pourvues de bossages et/ou d'encoches offrant une résistance au déplacement de l'axe (22). Ainsi, le galet de blocage (21) est monté sur le mécanisme de verrouillage (2) de manière mobile en translation parallèle au guide (1) et selon une course limitée.
- un élément de freinage (24), (Fig. 3), venant en appui sur le galet de blocage (21), (Fig. 1), ledit élément de freinage (24) étant monté mobile sur le mécanisme de verrouillage (2) suivant une direction globalement perpendiculaire au guide (1), de sorte qu'il peut être écarté du galet de blocage (21), afin de libérer ce dernier. Ainsi, on comprend aisément que lorsque l'élément de freinage (24) est en appui sur le galet de blocage (21), ledit élément de freinage (24) empêche la rotation du galet de blocage (21), lui-même solidaire du mécanisme de verrouillage (2) et en permanence au contact du guide (1), ce qui entraîne un verrouillage relatif entre le guide (1) et le mécanisme de verrouillage (2). L'invention prévoit que l'élément de freinage (24) peut être actionné par le mouvement du dispositif d'interface mobile (25) décrit ci-après, (Fig. 4) et (Fig. 5), au moyen d'une liaison mécanique constituée ici à titre d'exemple non limitatif, par des ergots (241a), (241b), (241c) et (241d) prévus sur l'élément de freinage (24) venant en correspondance avec des encoches oblongues, respectivement (254a), (254b), (254c) et (254d), prévues dans le dispositif d'interface mobile (25). Ainsi on comprend aisément que lorsque le dispositif d'interface mobile (25) se déplace par rapport au mécanisme de verrouillage (2), sous l'effet d'un déplacement de l'axe (22) au moment où il sort des encoches (251a) et (251b) décrites ci-après, ledit dispositif d'interface mobile (25) entraîne avec lui l'élément de freinage (24), permettant à ce dernier de s'écarter du galet de blocage (21) pour permettre la mise en rotation dudit galet de blocage (21). L'invention prévoit par ailleurs que l'élément de freinage (24), (Fig. 3), peut être soumis aux effets de moyens de rappel élastique (242a), (242b), (242c) et (242d) destinés à ramener ledit élément de freinage (24) dans la position bloquée, au contact du galet de blocage (21). Dans l'exemple de réalisation proposé ici, lesdits moyens de rappel élastique (242a), (242b), (242c) et (242d) sont constitués par des lames élastiques solidaires de l'élément de freinage (24) et munies à leurs extrémités libres de bossages (2421a), (2421b), (2421c) et (2421d) venant en correspondance avec des encoches (27a) et (27b) disposées dans les parois du mécanisme de verrouillage (2), (Fig. 2).
- Un dispositif d'interface mobile (25), (Fig. 4), lui-même monté mobile sur le mécanisme de verrouillage (2), suivant une direction globalement perpendiculaire au guide (1), de sorte que ledit dispositif d'interface mobile (25) vient comprimer des moyens de rappel élastique (26) décrits ci-après, lors du déplacement de l'axe (22) du galet de blocage (21) à l'intérieur des ouvertures latérales de guidage (23a) et (23b) pratiquées dans chacune des faces latérales du mécanisme de verrouillage (2). Ledit dispositif d'interface mobile (25) comprend, à cet effet, des moyens d'appui constitués respectivement par des encoches (251a) et (251b) et des rampes inclinées (252a), (252b), (252c) et (252d), (Fig. 4 et 5), venant en correspondance avec l'axe (22) du galet de blocage (21). Ainsi, lorsque l'axe (22) du galet de blocage (21) coulisse parallèlement au guide (1) dans les ouvertures latérales de guidage (23a) et (23b), (Fig. 6), ledit axe (22) quitte les encoches (251a) et (251b) du dispositif d'interface mobile (25) pour rejoindre respectivement les rampes inclinées (252a) et (252c), ou (252b) et (252d). Le dispositif d'interface mobile (25) subit alors un déplacement globalement perpendiculaire au mouvement de l'axe (22) permettant audit dispositif d'interface mobile (25) de comprimer les moyens de rappel élastique (26). De la sorte, l'axe (22) du galet (21) est soumis à des efforts de la part des moyens de rappel élastique (26), retransmis par le dispositif d'interface mobile (25).
- Les moyens de rappel élastique (26), (Fig. 1), solidaires du mécanisme de verrouillage (2) sont schématisés ici, à titre d'exemple, par un ressort hélicoïdal. Ainsi, sous l'effet des moyens de rappel élastique (26), le dispositif d'interface mobile (25) tend à maintenir l'axe (22) du galet de blocage (21) dans les encoches (251a) et (251b), la force de maintien étant fonction à la fois du niveau de l'effort procuré par les moyens de rappel élastique (26), mais aussi de la profondeur et de l'inclinaison des parois desdites encoches (251a) et (251b). On comprend aisément que plus les encoches (251a) et (251b) seront profondes et plus l'effort nécessaire à libérer l'axe (22) sera important, ce qui permet de définir la force de maintien procurée par le dispositif d'arrêt de porte. Par ailleurs, dès lors que l'axe (22) est sorti des encoches (251a) et (251b), sous l'effet d'un effort de traction suffisant apparu sur le guide (1), le galet de blocage (21) est alors libéré de l'emprise de l'élément de freinage (24) qui s'est écarté dudit galet de blocage (21) sous l'action du dispositif d'interface mobile (25), ledit axe (22) étant alors soumis à l'action des rampes inclinées (252a), (252c) ou (252b), (252d) (Fig. 6), lesquelles transmettent les efforts fournis par les moyens de rappel élastique (26) selon des inclinaisons plus ou moins fortes par rapport à la direction du guide (1). Ainsi, lorsque l'inclinaison des rampes inclinées (252a), (252c) ou (252b), (252d) est faible par rapport au guide (1), la composante parallèle au guide (1) des efforts transmis à l'axe (22) sera faible, alors même que les moyens de rappel élastique (26) fournissent une force de rappel relativement importante, due à la compression desdits moyens de rappel élastique (26). Ainsi, il est possible de maintenir un équilibre des forces entre, d'une part, les composantes parallèles au guide (1) provenant des efforts produits par les moyens de rappel élastique (26) et retransmis par le dispositif d'interface mobile (25), et qui tendent à ramener l'axe (22) vers la position bloquée, au fond des encoches (251a) et (251b), et d'autre part, les forces de résistance au roulement du galet de blocage (21) au contact du guide (1), lesdites forces de résistance au roulement étant par construction d'une amplitude volontairement limitée. Ainsi, lorsque le mouvement imposé à la porte lors des manoeuvres d'ouverture ou de fermeture cesse, lesdites forces de résistance au roulement cessent également et l'axe (22) n'étant plus soumis qu'aux efforts des moyens de rappel élastique (26), eux-mêmes retransmis par les rampes inclinées (252a), (252c) ou (252b), (252d) (Fig. 6), ledit axe (22) est alors ramené vers la position bloquée, au fond des encoches (251a) et (251b). Le dispositif d'arrêt de porte est alors en position verrouillée.
- Dans un mode de réalisation préférentiel, une variante des moyens de rappel élastique (26) peut être constituée par des lames élastiques (253a), (253b), (253c) et (253d), solidaires du dispositif d'interface mobile (25) et munies à leurs extrémités libres de bossages (2531a), (2531b), (2531c) et (2531d) venant en correspondance avec des encoches (28a) et (28b), elles-mêmes disposées dans les parois du mécanisme de verrouillage (2). (Fig. 5 et 7). L'avantage procuré par cette disposition réside dans un gain de place par rapport à une solution utilisant un ressort hélicoïdal.
- Le dispositif d'arrêt de porte objet de la présente invention peut comporter au moins un contre-galet (3), destiné à agir de manière opposée au galet de blocage (21) sur le guide (1). Ledit contre-galet (3) peut être maintenu en rotation sur un axe (31), lui-même directement solidaire du mécanisme de verrouillage (2) ou par l'intermédiaire d'un support (32). (Fig. 1). Par ailleurs, l'axe (31) du contre-galet (3) peut être guidé par des ouvertures oblongues (23c) et (23d) prévues sur les parois latérales du mécanisme de verrouillage (2). (Fig. 2). En outre, ledit contre-galet (3) peut être soumis aux effets de moyens de rappel élastique (4), schématisés ici par un ressort hélicoïdal, agissant directement ou par l'intermédiaire du support (32). On comprend aisément que la présence d'un contre-galet (3) permet de compenser les efforts imposés au guide (1) du fait de l'appui du galet de blocage (21). En outre, des encoches ou des bossages peuvent être prévus sur la face du guide (1) venant en contact avec le contre-galet (3), dans le but éventuel de constituer des zones de plus ou moins grande résistance au roulage, selon des dispositions bien connues sur les dispositifs d'arrêts de portes classiques.
- Variante du galet de blocage (21) (Fig. 8 et 9) : il est proposé de juxtaposer audit galet de blocage (21) au moins un autre galet, dit galet de friction (211), lequel est monté co-axialement au galet de blocage (21), sans contact avec le guide (1), et qui présente des surfaces de friction en contact avec ledit galet de blocage (21). Lors du déplacement du galet de blocage (21) et de sa mise en rotation au contact du guide (1) dans le mode déverrouillé, ledit galet de friction (211) vient s'immobiliser, soit au contact d'une partie rugueuse du mécanisme de verrouillage (2), cette partie rugueuse pouvant être constituée d'un patin (29a) ou (29b) solidaire du mécanisme de blocage (2), soit au contact d'une partie rugueuse du dispositif d'interface mobile (25), ladite partie rugueuse pouvant être constituée d'un élément de surface non représenté sur les figures, mais qui présente un niveau de rugosité apte à freiner le galet de friction (211). Cette disposition permet de générer ainsi un effort de friction entre le galet de blocage (21) lors de sa rotation au contact du guide (1) et le galet de friction (211) qui est alors maintenu immobile au contact du patin (29a) ou (29b), ou bien au contact d'une partie rugueuse du dispositif d'interface mobile (25). Il est à noter que les patins (29a) ou (29b) peuvent être monté sur le mécanisme de verrouillage (2) avec une certaine élasticité, ceci afin de ne pas limiter le déplacement de l'axe (22) du galet de blocage (21) au sein des encoches oblongues (23a) et (23b). Dans l'exemple de réalisation présenté ici, le galet de friction (211) est monté de façon à être placé en partie centrale du galet de blocage (21), co-axialement à ce dernier, et de sorte que les deux flancs latéraux dudit galet de friction (211) viennent au contact avec les flancs correspondants du galet de blocage (21). Le galet de blocage (21) aura donc une forme appropriée, ménageant un décrochement constituant un espace libre sur sa partie centrale. (Fig. 8). On notera qu'il est possible d'inverser cette disposition et de créer une variante qui place le galet de blocage (21) en partie centrale du galet de friction (211). Par ailleurs, dans l'exemple de réalisation présenté ici, le diamètre du galet de friction (211) est légèrement supérieur au diamètre du galet de blocage (21). Afin d'interdire le contact dudit galet de friction (211) avec le guide (1), la section de ce dernier possède une forme en U, permettant d'assurer un contact avec le galet de blocage (21) sur les parties extérieures de la surface de contact, tout en évitant le contact avec le galet de friction (211) en partie centrale. (Fig. 8).
- Variante des moyens de rappel élastique (Fig. 10) : selon un mode de réalisation préférentiel décrit ci-avant, les moyens de rappel élastique (26) agissant sur le dispositif d'interface mobile (25), peuvent être constitués par des lames élastiques (253a), (253b), (253c) et (253d), solidaires du dispositif d'interface mobile (25) et munies à leurs extrémités libres de bossages (2531a), (2531b), (2531c) et (2531d) venant en correspondance avec des encoches (28a) et (28b), elles-mêmes disposées dans les parois du mécanisme de verrouillage (2). (Fig. 5 et 2). L'invention propose de modifier la valeur de la force fournie par lesdits moyens de rappel élastique (253a), (253b), (253c) et (253d), en fonction de l'inclinaison du mécanisme de verrouillage (2), ceci afin d'accroître la force de maintien en mode verrouillé, dans les cas où le dispositif d'arrêt de porte équipant un véhicule automobile serait incliné, ledit véhicule étant stationné en pente par exemple. Dans l'exemple de réalisation présenté ici, les moyens de rappel élastique (253a), (253b), (253c) et (253d) d'une part, solidaires de l'élément d'interface mobile (25), et les moyens de rappel élastique (26Aa), (26Ab), (26Ac) et (26Ad) d'autre part, solidaires du bloc (26A), sont constitués par des lames élastiques munies à leurs extrémités libres de bossages venant en correspondance avec des encoches, elles-mêmes disposées dans les parois du mécanisme de verrouillage (2). (Fig. 10). Le bloc (26A) est lui-même monté mobile par rapport au mécanisme de verrouillage (2), selon la même direction que le dispositif d'interface mobile (25). La face supérieure (255) du dispositif d'interface mobile (25) est munie d'une cavité (2551) aux parois inclinées, laquelle cavité (2551) peut accueillir une bille sphérique (2552), maintenue dans sa position sous le simple effet de la gravité, tant que l'inclinaison éventuelle du mécanisme de verrouillage (2) reste inférieure à la pente des parois inclinées de la cavité (2551). La face inférieure du bloc (26A) est également munie d'une cavité (26Af), placée en vis-à-vis de la cavité (2551), de sorte que lorsqu'un déplacement du dispositif d'interface mobile (25) intervient, la face (255) dudit dispositif d'interface mobile (25) peut s'approcher de la face (26Ae) du bloc (26A), sans que la bille sphérique (2552), restée dans la cavité (2551), n'entre en contact avec le bloc (26A), (Fig. 11). Il résulte de cette disposition que, lorsque la bille sphérique (2552) reste logée dans la cavité (2551) sous l'effet de la gravité, seuls les moyens de rappel élastique (253a), (253b), (253c) et (253d) sont déplacés et mis en compression pour agir alors sur le dispositif d'interface mobile (25), tandis que les moyens de rappel élastique (26Aa), (26Ab), (26Ac) et (26Ad) ne sont pas sollicités et n'exercent aucun effort sur ledit dispositif d'interface mobile (25). A l'inverse, lorsque l'inclinaison du mécanisme de verrouillage (2) devient supérieure à un seuil donné et permet à la bille sphérique (2552) de quitter la cavité (2551), ladite bille sphérique (2552) peut venir s'interposer entre les deux faces (255) et (26Ae), constituant ainsi une liaison mécanique entre le dispositif d'interface mobile (25) et le bloc (26A), (Fig. 12). Dans ce cas, tout déplacement du dispositif d'interface mobile (25) entraîne un déplacement du bloc (26A) dans la même direction, ce qui provoque la mise en compression des moyens de rappel élastique (26Aa), (26Ab), (26Ac) et (26Ad). Ainsi les efforts des moyens de rappel élastique (253a), (253b), (253c), (253d) d'une part, et (26Aa), (26Ab), (26Ac), (26Ad) d'autre part, se cumulent, provoquant de la sorte un effort de maintien plus important sur le dispositif d'interface mobile (25). Il est à noter que dans certaines applications, la bille sphérique (2552) peut être remplacée par un rouleau cylindrique non décrit ici, sous réserve d'adapter la forme des cavités (2551) et (26Af) en conséquence.

## Revendications

1. Dispositif d'arrêt de porte, comportant un mécanisme de verrouillage (2) et un guide (1), l'un étant prévu pour être rendu solidaire de l'ouvrant de la porte, l'autre du dormant, ledit mécanisme de verrouillage (2) intégrant au moins un élément de freinage (24) venant en appui sur au moins un galet de blocage (21) placé au contact dudit guide (1), l'axe de rotation (22) dudit galet de blocage (21) pouvant se déplacer selon une translation globalement parallèle au guide (1) et avec un débattement limité par rapport audit mécanisme de verrouillage (2), lequel comporte encore des moyens de rappel élastique (26) destinés à repousser lesdits galet de blocage (21) et élément de freinage (24) en appui l'un sur l'autre, **caractérisé par le fait que** :
- ledit élément de freinage (24) vient en appui sur le galet de blocage (21) et est lui-même monté mobile sur le mécanisme de verrouillage (2), suivant une direction globalement perpendiculaire au guide (1);
- un dispositif d'interface mobile (25), lui-même monté mobile sur le mécanisme de verrouillage (2), suivant une direction globalement perpendiculaire au guide (1), comporte des moyens d'appui qui coopèrent avec l'axe (22) du galet de blocage (21) de façon à transmettre audit axe (22) et selon des inclinaisons variables, les efforts produits par les moyens de rappel élastique (26) ;
- ledit élément de freinage (24) peut être actionné par le mouvement du dispositif d'interface mobile (25), au moyen d'une liaison mécanique permettant d'accrocher l'élément de freinage (24) audit dispositif d'interface mobile (25), lors du déplacement de ce dernier;
- ledit élément de freinage (24) est encore soumis aux effets de moyens de rappel élastique, destinés à ramener ledit élément de freinage (24) dans la position de blocage, au contact du galet de blocage (21) ;

2. Dispositif d'arrêt de porte selon la revendication 1, **caractérisé en ce que** lesdits moyens d'appui du dispositif d'interface mobile (25) sont constitués par des encoches et/ou des bossages dont les formes présentent des rampes avec différents degrés d'inclinaison, venant directement ou indirectement en correspondance avec l'axe (22) du galet de blocage (21);

3. Dispositif d'arrêt de porte selon les revendications 1 et 2, **caractérisé en ce que** les moyens de rappel élastique (26) qui agissent sur le dispositif d'interface mobile (25), sont constitués par des lames élastiques (253a), (253b), (253c) et (253d), solidaires du dispositif d'interface mobile (25) et munies à leurs extrémités libres de bossages (2531a), (2531b), (2531c) et (2531d) venant en correspondance avec des encoches (28a) et (28b), elles-mêmes disposées dans les parois du mécanisme de verrouillage (2);

4. Dispositif d'arrêt de porte selon les revendications 1 à 3, **caractérisé en ce que** le galet de blocage (21) est juxtaposé avec au moins un autre galet, dit galet de friction (211), lequel est monté co-axialement au galet de blocage (21), sans contact avec le guide (1), et lequel galet de friction (211) présente des surfaces de friction en contact avec ledit galet de blocage (21);

5. Dispositif d'arrêt de porte selon les revendications 1 à 4, **caractérisé en ce que** lors du déplacement en translation de l'axe (22) du galet de blocage (21), lequel se met en rotation en mode déverrouillé, le galet de friction (211) vient s'immobiliser au contact d'une partie rugueuse du mécanisme de verrouillage (2) ou du dispositif d'interface mobile (25);

6. Dispositif d'arrêt de porte selon les revendications 1 à 5, **caractérisé en ce que** les moyens de rappel élastique (26) sont réalisés par superposition des effets d'au moins deux moyens de rappel élastique distincts, dont les efforts se cumulent dans la même direction, au moyen d'une bille sphérique (2552) venant s'interposer entre deux parties situées en vis-à-vis desdits moyens de rappel élastique distincts sous l'effet d'une inclinaison du mécanisme de verrouillage (2) supérieure à un seuil prédéterminé; en deçà dudit seuil prédéterminé d'inclinaison, ladite bille sphérique (2552) reste logée sous l'effet de la gravité dans une cavité (2551) aux parois inclinées, et dans ce cas, ladite bille sphérique (2552) ne s'interpose pas entre les deux parties situées en vis-à-vis desdits moyens de rappel élastique distincts et les effets de ces derniers ne se cumulent pas;

7. Dispositif d'arrêt de porte selon les revendications 1 à 6, **caractérisé en ce que** ledit dispositif est monté sur la porte d'un véhicule automobile;

8. Dispositif d'arrêt de porte selon les revendications 1 à 6, **caractérisé en ce que** ledit dispositif est monté sur la porte d'un bâtiment;

9. Dispositif d'arrêt de porte selon les revendications 1 à 6, **caractérisé en ce que** ledit dispositif est monté sur la porte d'un appareil électroménager.

## Patentansprüche

1. Türstoppvorrichtung, umfassend einen Verriegelungsmechanismus (2) und eine Führung (1), wobei das eine vorgesehen ist, um fest mit dem Türblatt verbunden zu werden, das andere mit dem Türrahmen, wobei der besagte Verriegelungsmechanismus (2) mindestens ein Bremselement (24) beinhaltet, das sich auf mindestens einer Sperrrolle (21), die mit der besagten Führung (1) in Kontakt ist, anlegt, wobei sich die Rotationsachse (22) der besagten Sperrrolle (21) im Wesentlichen parallel zur Führung (1) und mit einem eingeschränkten Spielraum in Bezug auf den besagten Verriegelungsmechanismus (2) verschieben kann, wobei dieser außerdem elastische Rückstellmittel (26) umfasst, die dazu bestimmt sind, die Sperrrolle (21) und das Bremselement (24) aufeinander aufliegend zurückzudrängen, **dadurch gekennzeichnet, dass**:
- sich das besagte Bremselement (24) auf der Sperrrolle (21) anlegt und selbst bewegbar in eine Richtung, die im Wesentlichen senkrecht zur Führung (1) verläuft, auf dem Verriegelungsmechanismus (2) angebracht ist;
- eine bewegbare Schnittstellenvorrichtung (25), die selbst bewegbar in eine Richtung, die im Wesentlichen senkrecht zur Führung (1) verläuft, auf dem Verriegelungsmechanismus (2) angebracht ist, Auflageelemente umfasst, die mit der Achse (22) der Sperrrolle (21) kooperieren, sodass die Kräfte, die von den elastischen Rückstellmitteln (26) erzeugt werden, und gemäß variablen Neigungen auf die besagte Achse (22) übertragen werden;
- das besagte Bremselement (24) durch die Bewegung der bewegbaren Schnittstellenvorrichtung (25) mittels einer mechanischen Verbindung betätigt werden kann, die ermöglicht, das Bremselement (24) an die bewegbare Schnittstellenvorrichtung (25) zu koppeln, wenn Letztere verschoben wird;
- das besagte Bremselement (24) außerdem den Wirkungen elastischer Rückstellmittel ausgesetzt ist, die dazu bestimmt sind, das besagte Bremselement (24) in die Sperrposition in Kontakt mit der Sperrrolle (21) zurückzuführen;

2. Türstoppvorrichtung nach Anspruch 1, **dadurch gekennzeichnet, dass** die besagten Auflageelemente der bewegbaren Schnittstellenvorrichtung (25) durch Kerben und/oder Vorsprünge gebildet werden, deren Formen Rampen mit verschiedenen Neigungsgraden aufweisen, die direkt oder indirekt mit der Achse (22) der Sperrrolle (21) korrespondieren;

3. Türstoppvorrichtung nach den Ansprüchen 1 und 2, **dadurch gekennzeichnet, dass** die elastischen Rückstellmittel (26), die auf die bewegbare Schnittstellenvorrichtung (25) wirken, durch elastische Lamellen (253a), (253b), (253c) und (253d) gebildet werden, die fest mit der bewegbaren Schnittstellenvorrichtung (25) verbunden und an ihren freien Enden mit Vorsprüngen (2531a), (2531b), (2531c) und (2531d) versehen sind, die mit Kerben (28a) und (28b) korrespondieren, wobei diese selbst in den Wänden des Verriegelungsmechanismus (2) angeordnet sind;

4. Türstoppvorrichtung nach den Ansprüchen 1 bis 3, **dadurch gekennzeichnet, dass** sich die Sperrrolle (21) neben mindestens einer anderen Rolle befindet, die als Reibungsrolle (211) bezeichnet wird, wobei diese koaxial an der Sperrrolle (21) angebracht ist, ohne die Führung (1) zu kontaktieren, und wobei die Reibungsrolle (211) Reibungsflächen in Kontakt mit der Sperrrolle (21) aufweist;

5. Türstoppvorrichtung nach den Ansprüchen 1 bis 4, **dadurch gekennzeichnet, dass** bei der Verschiebung der Achse (22) der Sperrrolle (21), die in entriegeltem Zustand rotiert, die Reibungsrolle (211) in Kontakt mit einem rauen Abschnitt des Verriegelungsmechanismus (2) oder der bewegbaren Schnittstellenvorrichtung (25) zur Ruhe kommt;

6. Türstoppvorrichtung nach den Ansprüchen 1 bis 5, **dadurch gekennzeichnet, dass** die elastischen Rückstellmittel (26) durch Überlagerung der Wirkung von mindestens zwei eigenständigen elastischen Rückstellmitteln umgesetzt werden, deren Kräfte in die gleiche Richtung kumulieren, mittels einer sphärischen Kugel (2552), die sich zwischen zwei Abschnitte fügt, die sich gegenüber den besagten eigenständigen elastischen Rückstellmitteln befinden, unter der Wirkung einer Neigung des Verriegelungsmechanismus (2), die höher ist als eine zuvor festgelegte Schwelle; unterhalb der besagten zuvor festgelegten Neigungsschwelle bleibt die besagte sphärische Kugel (2552) unter der Wirkung der Schwerkraft in einem Hohlraum (2551) mit geneigten Wänden ruhend, und in diesem Fall fügt sich die besagte sphärische Kugel (2552) nicht zwischen die zwei Abschnitte, die sich gegenüber den eigenständigen elastischen Rückstellmitteln befinden und die Kräfte von Letzteren kumulieren nicht;

7. Türstoppvorrichtung nach den Ansprüchen 1 bis 6, **dadurch gekennzeichnet, dass** die besagte Vorrichtung an der Tür eines Kraftfahrzeugs angebracht ist;

8. Türstoppvorrichtung nach den Ansprüchen 1 bis 6, **dadurch gekennzeichnet, dass** die besagte Vorrichtung an der Tür eines Gebäudes angebracht ist;

9. Türstoppvorrichtung nach den Ansprüchen 1 bis 6, **dadurch gekennzeichnet, dass** die besagte Vorrichtung an der Tür eines Haushaltsgeräts angebracht ist.

## Claims

1. Door stop device, comprising a blocking mechanism (2) and a guiding arm (1), one of these elements being fastened to the opening part of the door, the other element being fastened to the frame of the door, the said blocking mechanism (2) comprising at least one braking element (24) pressed against at least one braking roller (21) which is kept in contact with the said guiding arm (1), the axle (22) of said braking roller (21) being allowed to move relatively to the body of blocking mechanism (2) within specified limits, in a direction globally parallel to guiding arm (1), the said blocking mechanism (2) also comprising elastic means (26) defined to bring the said braking roller (21) and braking element (24), back in compression against each other, **characterized by** the fact that:
- said braking element (24) is pressed against braking roller (21), and is itself mounted on blocking mechanism (2) and allowed to move in a direction globally perpendicular to guiding arm (1);
- a mobile interface unit (25), itself mounted on blocking mechanism (2) and allowed to move in a direction globally perpendicular to guiding arm (1), comprises bearing means which cooperate with axle (22) of braking roller (21) in order to transfer to said axle (22) and with various inclines, the forces generated by the elastic means (26);
- said braking element (24) may be displaced by the movement of mobile interface unit (25), by the means of a mechanical link allowing braking element (24) to be tied to said mobile interface unit (25), during the displacement of said mobile interface unit (25);
- said braking element (24) is also submitted to the load of elastic means, which are intended to bring said braking element (24) back in the locked position, in contact with braking roller (21);

2. Door stop device as described in claim 1, **characterized by** the fact that the said bearing means of mobile interface unit (25), are constituted by notches and/or bosses, the shapes of which comprise ramps with variable slopes, which are directly or indirectly in contact with axle (22) of braking roller (21);

3. Door stop device as described in claims 1 and 2, **characterized by** the fact that elastic means (26), which cooperate with mobile interface unit (25), are constituted by elastic blades (253a), (253b), (253c) and (253d), linked to mobile interface unit (25) and comprising bosses (2531 a), (2531b), (2531c) and (2531d) located at their free extremity, the said bosses being located in front of notches (28a) and (28b) which are located on the faces of blocking mechanism (2);

4. Door stop device as described in claims 1 to 3, **characterized by** the fact that braking roller (21) is placed besides at least one additional roller, so called friction roller (211), which is mounted on the same axis as braking roller (21), without any contact with guiding arm (1), and said friction roller (211) comprises rough surfaces in contact with braking roller (21);

5. Door stop device as described in claims 1 to 4, **characterized by** the fact that during the linear displacement of axle (22) of braking roller (21), which braking roller (21) rotates in unlocked mode, friction roller (211) is blocked by being in contact with a rough part of blocking mechanism (2) or a rough part of mobile interface unit (25);

6. Door stop device as described in claims 1 to 5, **characterized by** the fact that elastic means (26) are realized by adding the loads generated by at least two distinct elastic means, the loads of which are cumulated in the same direction, by the means of a spherical ball (2552) which may roll in between two parts of said distinct elastic means, which parts are located in front of each other, this being due to an incline of blocking mechanism (2) exceeding a predefined threshold; below the said predefined inclination threshold, said spherical ball (2552) remains, by the effect of gravity, located in a cavity (2551) designed with inclined faces, and in this case, said spherical ball (2552) does not roll in between the two parts located in front of each other of said distinct elastic means, and the loads of said elastic means are not cumulated;

7. Door stop device as described in claims 1 to 6, **characterized by** the fact that said door stop device is mounted on the door of a motor vehicle;

8. Door stop device as described in claims 1 to 6, **characterized by** the fact that said door stop device is mounted on a door of a building;

9. Door stop device as described in claims 1 to 6, **characterized by** the fact that said door stop device is mounted on the door of a household appliance.
